(19) Europäisches Patentamt
European Patent Office
Office européen des brevets

(11) **EP 3 553 709 A1**

(12) **EUROPEAN PATENT APPLICATION**

(43) Date of publication:
**16.10.2019 Bulletin 2019/42**

(51) Int Cl.:
***G06N 3/063*** (2006.01)        ***G06N 3/04*** (2006.01)

(21) Application number: **19166678.3**

(22) Date of filing: **02.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2018 US 201815951169**

(71) Applicant: **Gyrfalcon Technology Inc.**
**Milpitas, CA 95035 (US)**

(72) Inventors:
• YANG, Lin
  **Milpitas, CA 95035 (US)**
• SUN, Baohua
  **Milpitas, CA 95035 (US)**
• DONG, Jason Z.
  **Milpitas, CA 95035 (US)**
• YOUNG, Charles Jin
  **Milpitas, CA 95035 (US)**

(74) Representative: **Becker Kurig Straus**
**Patentanwälte**
**Bavariastrasse 7**
**80336 München (DE)**

(54) **DEEP LEARNING IMAGE PROCESSING SYSTEMS USING MODULARLY CONNECTED CNN BASED INTEGRATED CIRCUITS**

(57)    A deep learning image processing system contains at least first and second groups of cellular neural networks (CNN) based integrated circuits (ICs). The first group and the second group are operatively connected in parallel via a network bus. CNN based ICs within each of the first and second groups are operatively connected in series via the network bus. The first group is configured for performing convolutional operations in respective portions of a deep learning model for extracting features out of a first subsection of input data. The second group is configured for performing convolutional operations in respective portions of the deep learning model for extracting features out of a second subsection of the input data. The deep learning model is divided into a plurality of consecutive portions being handled by the respective CNN based ICs. The input data is partitioned into at least first and second subsections.

FIG. 1A

**Description**

**FIELD**

The invention generally relates to the field of machine learning and more particularly to deep learning image processing systems using modularly connected Cellular Neural Networks (CNN) based digital integrated circuits (ICs).

**BACKGROUND**

Cellular Neural Networks or Cellular Nonlinear Networks (CNN) have been applied to many different fields and problems including, but limited to, image processing since 1988. However, most of the prior art CNN approaches are either based on software solutions (e.g., Convolutional Neural Networks, Recurrent Neural Networks, etc.) or based on hardware that are designed for other purposes (e.g., graphic processing, general computation, etc.). As a result, CNN prior approaches are too slow in term of computational speed and/or too expensive thereby impractical for processing large amount of imagery data. The imagery data can be from any two-dimensional data (e.g., still photo, picture, a frame of a video stream, converted form of voice data, etc.). One of the solutions is to perform convolutional operations in a hardware, for example, Application Specific Integrated Circuit (ASIC). However, prior art approaches of hardware have experiences some shortcomings: 1) inability to process large imagery data due to certain limitation as to input and output formats, and 2) inability to load or store entire set of filter coefficients of certain large deep learning models due to limited size of memory buffers. Therefore, it would be desirable to have an improved deep learning image processing system that overcomes the aforementioned shortcomings, setbacks and/or problems.

**SUMMARY**

This section is for the purpose of summarizing some aspects of the invention and to briefly introduce some preferred embodiments. Simplifications or omissions in this section as well as in the abstract and the title herein may be made to avoid obscuring the purpose of the section. Such simplifications or omissions are not intended to limit the scope of the invention.

Deep learning image processing systems using modular connected CNN based ICs are disclosed. According to one aspect of the disclosure, a deep learning image processing system contains at least first and second groups of cellular neural networks (CNN) based integrated circuits (ICs). The first group and the second group are operatively connected in parallel via a network bus. CNN based ICs within each of the first and second groups are operatively connected in series via the network bus. The first group is configured for performing convolutional operations in respective portions of a deep learning model for extracting features out of a first subsection of input data. The second group is configured for performing convolutional operations in respective portions of the deep learning model for extracting features out of a second subsection of the input data. The deep learning model is divided into a plurality of consecutive portions being handled by the respective CNN based ICs. The input data is partitioned into at least first and second subsections.

According to another aspect of the disclosure, each CNN based IC contains cellular neural networks (CNN) processing engines operatively coupled to at least one input/output data bus. The CNN processing engines are connected in a loop with a clock-skew circuit. Each CNN processing engine includes a CNN processing block and first and second sets of memory buffers. CNN processing block is configured for simultaneously obtaining convolution operations results using corresponding input data and pre-trained filter coefficients. The first set of memory buffers operatively couples to the CNN processing block for storing the input data. The second set of memory buffers operative couples to the CNN processing block for storing the pre-trained filter coefficients. The CNN based IC is further configured to contain an input buffer for storing output data from another CNN based IC connected in series.

Objects, features, and advantages of the invention will become apparent upon examining the following detailed description of an embodiment thereof, taken in conjunction with the attached drawings.

**BRIEF DESCRIPTION OF THE DRAWINGS**

These and other features, aspects, and advantages of the invention will be better understood with regard to the following description, appended claims, and accompanying drawings as follows:

FIGS. 1A-1B are block diagrams illustrating an example integrated circuit designed for extracting features from input imagery data in accordance with one embodiment of the invention;

FIG.2 is a function block diagram showing an example controller configured for controlling operations of one or more CNN processing engines according to an embodiment of the invention;

FIG. 3 is a diagram showing an example CNN processing engine in accordance with one embodiment of the invention;

FIG. 4 is a diagram showing MxM pixel locations within a (M+2)-pixel by (M+2)-pixel region, according to an embodiment of the invention;

FIGS. 5A-5C are diagrams showing three example pixel locations, according to an embodiment of the invention;

FIG. 6 is a diagram illustrating an example data arrangement for performing 3x3 convolutions at a pixel location, according to one embodiment of the invention;

FIG. 7 is a function block diagram illustrating an example circuitry for performing 3x3 convolutions at a pixel location, according to one embodiment of the invention;

FIG. 8 is a diagram showing an example rectification according to an embodiment of the invention;

FIGS. 9A-9B are diagrams showing two example 2x2 pooling operations according to an embodiment of the invention;

FIG. 10 is a diagram illustrating a 2x2 pooling operation reduces M-pixel by M-pixel block to a (M/2)-pixel by (M/2)-pixel block in accordance with one embodiment of the invention;

FIGS. 11A-11C are diagrams illustrating examples of M-pixel by M-pixel blocks and corresponding (M+2)-pixel by (M+2)-pixel region in an input image, according to one embodiment of the invention;

FIG. 12 is a diagram illustrating an example of a first set of memory buffers for storing received imagery data in accordance with an embodiment of the invention;

FIG. 13A is a diagram showing two operational modes of an example second set of memory buffers for storing filter coefficients in accordance with an embodiment of the invention;

FIG. 13B is a diagram showing example storage schemes of filter coefficients in the second set of memory buffers, according to an embodiment of the invention;

FIG. 14 is a diagram showing a plurality of CNN processing engines connected as a loop via an example clock-skew circuit in accordance of an embodiment of the invention;

FIG. 15 is a schematic diagram showing an example image processing technique based on convolutional neural networks in accordance with an embodiment of the invention;

FIG. 16 is a flowchart illustrating an example process of achieving a trained convolutional neural networks model having bi-valued 3x3 filter kernels in accordance with an embodiment of the invention;

FIG. 17 is a diagram showing an example filter kernel conversion scheme in accordance with the invention;

FIG. 18 is a diagram showing an example data conversion scheme;

FIG. 19 is a schematic diagram showing an example deep learning image processing system in accordance with an embodiment of the invention;

FIG. 20 is a diagram illustrating example consecutive portions in a deep learning model in accordance with an embodiment of the invention;

FIG. 21 is a schematic diagram showing an example deep learning image processing system with CNN based ICs being connected in series, according to an embodiment of the invention;

FIG. 22 is a diagram showing example subsections of input data in accordance with an embodiment of the invention; and

FIG. 23 is a schematic diagram showing an example deep learning image processing system with CNN based ICs being connected in parallel, according to an embodiment of the invention.

## DETAILED DESCRIPTIONS

In the following description, numerous specific details are set forth in order to provide a thorough understanding of the invention. However, it will become obvious to those skilled in the art that the invention may be practiced without these specific details. The descriptions and representations herein are the common means used by those experienced or skilled in the art to most effectively convey the substance of their work to others skilled in the art. In other instances, well-known methods, procedures, and components have not been described in detail to avoid unnecessarily obscuring aspects of the invention.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments. Further, the order of blocks in process flowcharts or diagrams or circuits representing one or more embodiments of the invention do not inherently indicate any particular order nor imply any limitations in the invention. Used herein, the terms "top", "bottom", "right" and "left" are intended to provide relative positions for the purposes of description, and are not intended to designate an absolute frame of reference

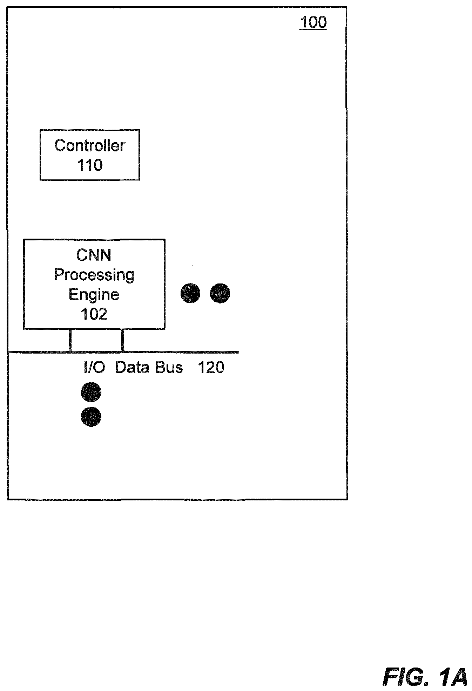

Embodiments of the invention are discussed herein with reference to FIGS. 1A-23. However, those skilled in the art will readily appreciate that the detailed description given herein with respect to these figures is for explanatory purposes as the invention extends beyond these limited embodiments.

Referring first to FIG. 1A, it is shown a block diagram illustrating an example digital integrated circuit (IC) 100 for extracting features out of an input image in accordance with one embodiment of the invention.

The integrated circuit 100 is implemented as a digital semi-conductor chip and contains a CNN processing engine controller 110, and one or more neural networks (CNN) processing engines 102 operatively coupled to at least one input/output (I/O) data bus 120. Controller 110 is configured to control various operations of the CNN processing engines 102 for extracting features out of an input image based on an image processing technique by performing multiple layers of 3x3 convolutions with rectifications or other nonlinear operations (e.g., sigmoid function), and 2x2 pooling operations. To perform 3x3 convolutions requires imagery data in digital form and corresponding filter coefficients, which are supplied to the CNN processing engine 102 via input/output data bus 120. It is well known that digital semi-conductor chip contains logic gates, multiplexers, register files, memories, state machines, etc.

According to one embodiment, the digital integrated circuit 100 is extendable and scalable. For example, multiple copy of the digital integrated circuit 100 can be implemented on one semiconductor chip.

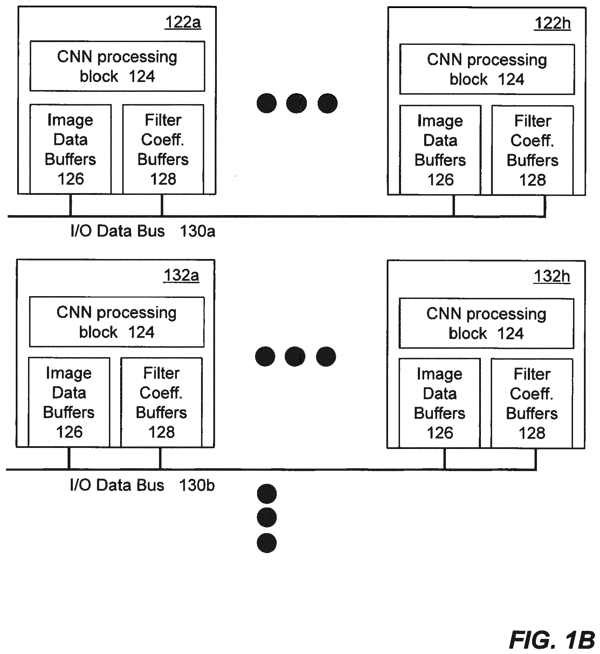

All of the CNN processing engines are identical. For illustrating simplicity, only few (i.e., CNN processing engines 122a-122h, 132a-132h) are shown in FIG. 1B. The invention sets no limit to the number of CNN processing engines on a digital semi-conductor chip.

Each CNN processing engine 122a-122h, 132a-132h contains a CNN processing block 124, a first set of memory buffers 126 and a second set of memory buffers 128. The first set of memory buffers 126 is configured for receiving imagery data and for supplying the already received imagery data to the CNN processing block 124. The second set of memory buffers 128 is configured for storing filter coefficients and for supplying the already received filter coefficients to the CNN processing block 124. In general, the number of CNN processing engines on a chip is $2^n$, where n is an integer (i.e., 0, 1, 2, 3, ...). As shown in FIG. IB, CNN processing engines 122a-122h are operatively coupled to a first input/output data bus 130a while CNN processing engines 132a-132h are operatively coupled to a second input/output data bus 130b. Each input/output data bus 130a-130b is configured for independently transmitting data (i.e., imagery data and filter coefficients). In one embodiment, the first and the second sets of memory buffers comprise random access memory (RAM). Each of the first and the second sets are logically defined. In other words, respective sizes of the first and the second sets can be reconfigured to accommodate respective amounts of imagery data and filter coefficients.

The first and the second I/O data bus 130a-130b are shown here to connect the CNN processing engines 122a-122h, 132a-132h in a sequential scheme. In another embodiment, the at least one I/O data bus may have different connection scheme to the CNN processing engines to accomplish the same purpose of parallel data input and output for improving performance.

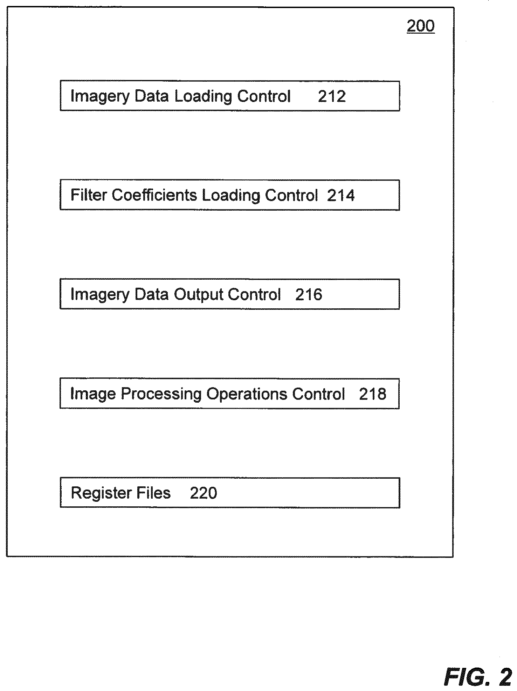

FIG. 2 is a diagram showing an example controller 200 for controlling various operations of at least one CNN processing engine configured on the integrated circuit. Controller 200 comprises circuitry to control imagery data loading control 212, filter coefficients loading control 214, imagery data output control 216, and image processing operations control 218. Controller 200 further includes register files 220 for storing the specific configuration (e.g., number of CNN processing engines, number of input/output data bus, etc.) in the integrated circuit.

Image data loading control 212 controls loading of imagery data to respective CNN processing engines via the corresponding I/O data bus. Filter coefficients loading control 214 controls loading of filter coefficients to respective CNN processing engines via corresponding I/O data bus. Imagery data output control 216 controls output of the imagery data from respective CNN processing engines via corresponding I/O data bus. Image processing operations control 218 controls various operations such as convolutions, rectifications and pooling operations which can be defined by user of the integrated circuit via a set of user defined directives (e.g., file contains a series of operations such as convolution, rectification, pooling, etc.).

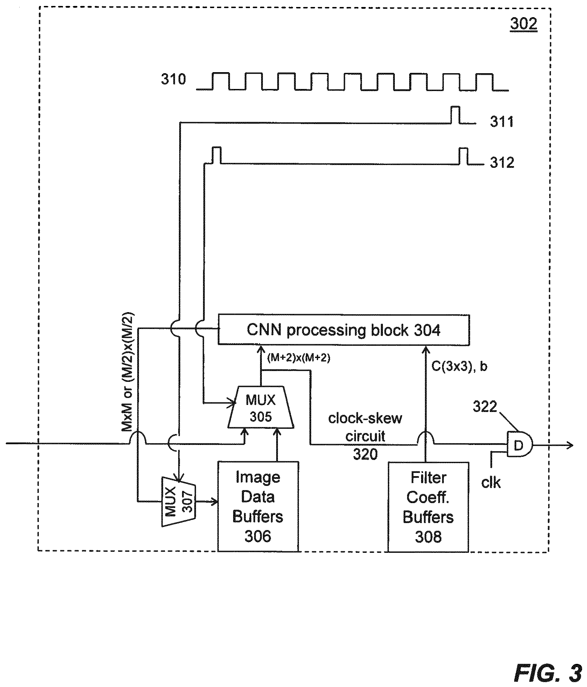

More details of a CNN processing engine 302 are shown in FIG. 3. A CNN processing block 304 contains digital circuitry that simultaneously obtains MxM convolution operations results by performing 3x3 convolutions at MxM pixel locations using imagery data of a (M+2)-pixel by (M+2)-pixel region and corresponding filter coefficients from the respective memory buffers. The (M+2)-pixel by (M+2)-pixel region is formed with the MxM pixel locations as an M-pixel by M-pixel central portion plus a one-pixel border surrounding the central portion. M is a positive integer. In one embodiment, M equals to 14 and therefore, (M+2) equals to 16, MxM equals to 14x14=196, and M/2 equals 7.

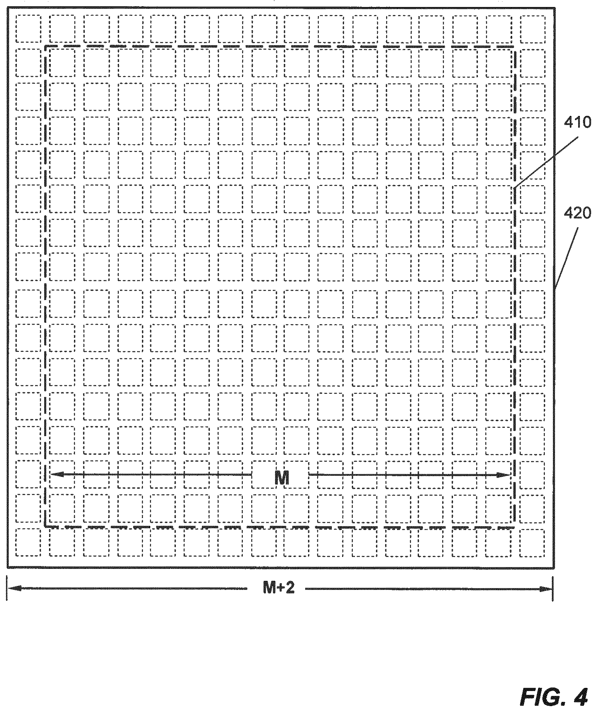

FIG. 4 is a diagram showing a diagram representing (M+2)-pixel by(M+2)-pixel region 410 with a central portion of MxM pixel locations 420 used in the CNN processing engine 302.

Imagery data may represent characteristics of a pixel in the input image (e.g., one of the color (e.g., RGB (red, green, blue)) values of the pixel, or distance between pixel and observing location). Generally, the value of the RGB is an integer between 0 and 255. Values of filter coefficients are floating point integer numbers that can be either positive or negative.

In order to achieve faster computations, few computational performance improvement techniques have been used and implemented in the CNN processing block 304. In one embodiment, representation of imagery data uses as few bits as practical (e.g., 5-bit representation). In another embodiment, each filter coefficient is represented as an integer with a radix point. Similarly, the integer representing the filter coefficient uses as few bits as practical (e.g., 12-bit representation). As a result, 3x3 convolutions can then be performed using fixed-point arithmetic for faster computations.

Each 3x3 convolution produces one convolution operations result, Out(m, n), based on the following formula:

$$\text{Out}(m,n) = \sum_{1 \le i,j \le 3} \text{In}(m,n,i,j) \times C(i,j) - b \qquad (1)$$

where:

m, n are corresponding row and column numbers for identifying which imagery data (pixel) within the (M+2)-pixel by (M+2)-pixel region the convolution is performed;
In(m,n,i,j) is a 3-pixel by 3-pixel area centered at pixel location (m, n) within the region;
C(i, j) represents one of the nine weight coefficients C(3x3), each corresponds to one of the 3-pixel by 3-pixel area;
b represents an offset coefficient; and
i, j are indices of weight coefficients C(i, j).

Each CNN processing block 304 produces MxM convolution operations results simultaneously and, all CNN processing engines perform simultaneous operations.

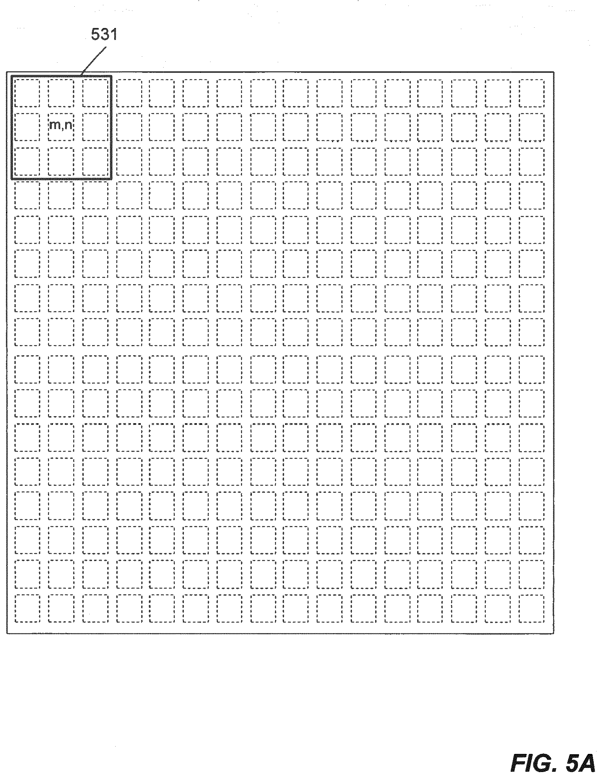

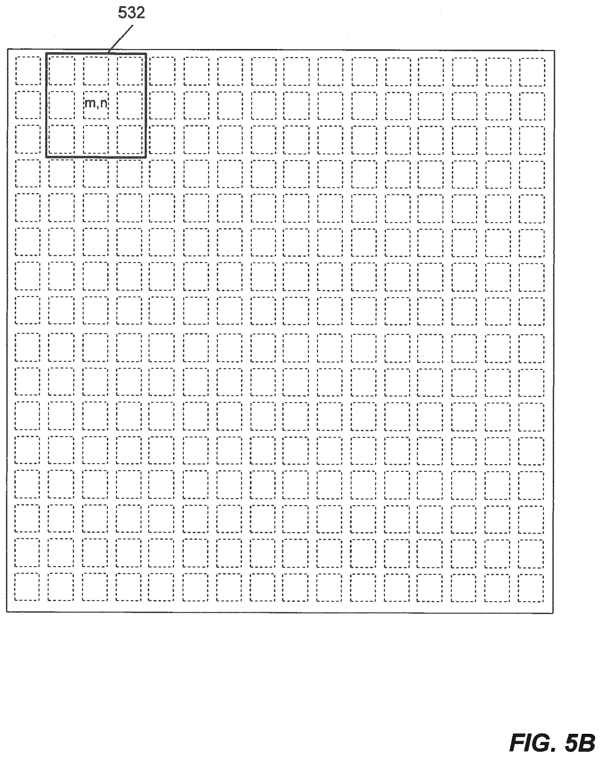

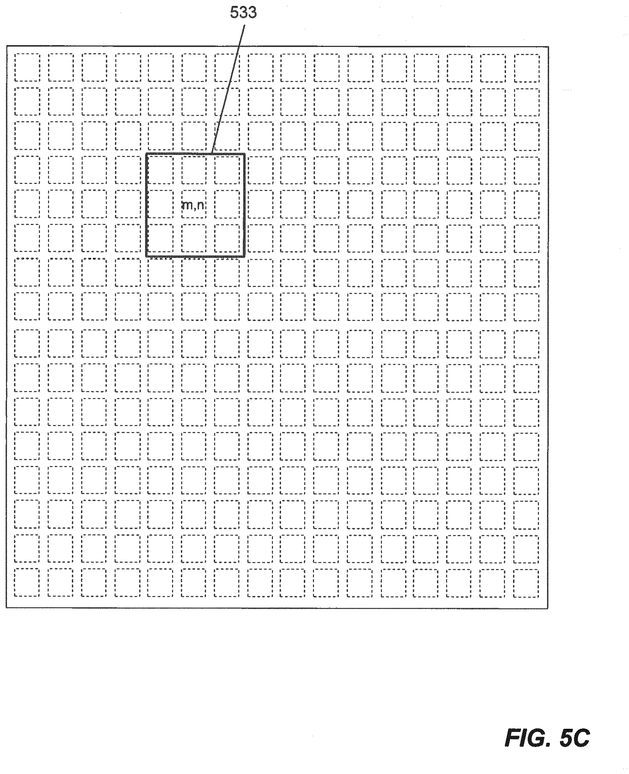

FIGS. 5A-5C show three different examples of the MxM pixel locations. The first pixel location 531 shown in FIG. 5A is in the center of a 3-pixel by 3-pixel area within the (M+2)-pixel by (M+2)-pixel region at the upper left corner. The second pixel location 532 shown in FIG. 5B is one pixel data shift to the right of the first pixel location 531. The third pixel location 533 shown in FIG. 5C is a typical example pixel location. MxM pixel locations contain multiple overlapping 3-pixel by 3-pixel areas within the (M+2)-pixel by (M+2)-pixel region.

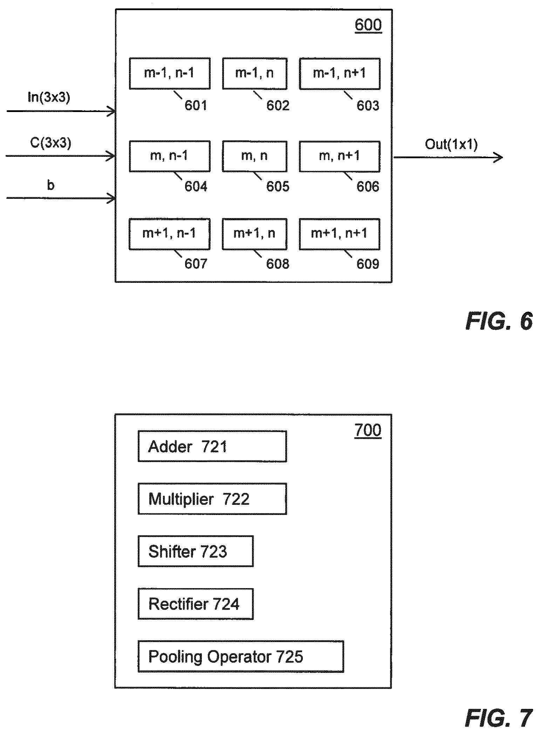

To perform 3x3 convolutions at each sampling location, an example data arrangement is shown in FIG. 6. Imagery data (i.e., In(3x3)) and filter coefficients (i.e., weight coefficients C(3x3) and an offset coefficient b) are fed into an example CNN 3x3 circuitry 600. After 3x3 convolutions operation in accordance with Formula (1), one output result (i.e., Out(1x1)) is produced. At each sampling location, the imagery data In(3x3) is centered at pixel coordinates (m, n) 605 with eight immediate neighbor pixels 601-604, 606-609.

FIG. 7 is a function diagram showing an example CNN 3x3 circuitry 700 for performing 3x3 convolutions at each pixel location. The circuitry 700 contains at least adder 721, multiplier 722, shifter 723, rectifier 724 and pooling operator 725. In a digital semi-conductor implementation, all of these can be achieved with logic gates and multiplexers, which are generated using well-known methods (e.g., hardware description language such as Verilog, etc.). Adder 721 and multiplier 722 are used for addition and multiplication operations. Shifter 723 is for shifting the output result in accordance with fixed-point arithmetic involved in the 3x3 convolutions. Rectifier 724 is for setting negative output results to zero. Pooling operator 725 is for performing 2x2 pooling operations.

Imagery data are stored in a first set of memory buffers 306 , while filter coefficients are stored in a second set of memory buffers 308. Both imagery data and filter coefficients are fed to the CNN block 304 at each clock of the digital integrated circuit. Filter coefficients (i.e., C(3x3) and b) are fed into the CNN processing block 304 directly from the second set of memory buffers 308. However, imagery data are fed into the CNN processing block 304 via a multiplexer MUX 305 from the first set of memory buffers 306. Multiplexer 305 selects imagery data from the first set of memory buffers based on a clock signal (e.g., pulse 312).

Otherwise, multiplexer MUX 305 selects imagery data from a first neighbor CNN processing engine (from the left side of FIG. 3 not shown) through a clock-skew circuit 320.

At the same time, a copy of the imagery data fed into the CNN processing block 304 is sent to a second neighbor CNN processing engine (to the right side of FIG. 3 not shown) via the clock-skew circuit 320. Clock-skew circuit 320 can be achieved with known techniques (e.g., a D flip-flop 322).

The first neighbor CNN processing engine may be referred to as an upstream neighbor CNN processing engine in the loop formed by the clock-skew circuit 320. The second neighbor CNN processing engine may be referred to as a downstream CNN processing engine. In another embodiment, when the data flow direction of the clock-skew circuit is reversed, the first and the second CNN processing engines are also reversed becoming downstream and upstream neighbors, respectively.

After 3x3 convolutions for each group of imagery data are performed for predefined number of filter coefficients, convolution operations results Out(m, n) are sent to the first set of memory buffers via another multiplex MUX 307 based on another clock signal (e.g., pulse 311). An example clock cycle 310 is drawn for demonstrating the time relationship between pulse 311 and pulse 312. As shown pulse 311 is one clock before pulse 312, as a result, the 3x3 convolution operations results are stored into the first set of memory buffers after a particular block of imagery data has been processed by all CNN processing engines through the clock-skew circuit 320.

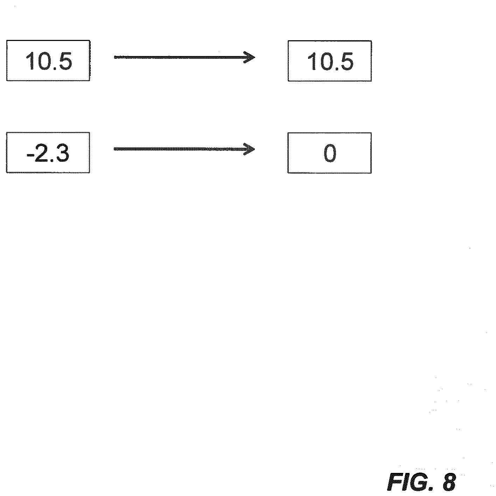

After the convolution operations result Out(m, n) is obtained from Formula (1), rectification procedure may be performed as directed by image processing control 218. Any convolution operations result, Out(m, n), less than zero (i.e., negative value) is set to zero. In other words, only positive value of output results are kept. FIG. 8 shows two example outcomes of rectification. A positive output value 10.5 retains as 10.5 while -2.3 becomes 0. Rectification causes non-linearity in the integrated circuits.

If a 2x2 pooling operation is required, the MxM output results are reduced to (M/2)x(M/2). In order to store the (M/2)x(M/2) output results in corresponding locations in the first set of memory buffers, additional bookkeeping techniques are required to track proper memory addresses such that four (M/2)x(M/2) output results can be processed in one CNN processing engine.

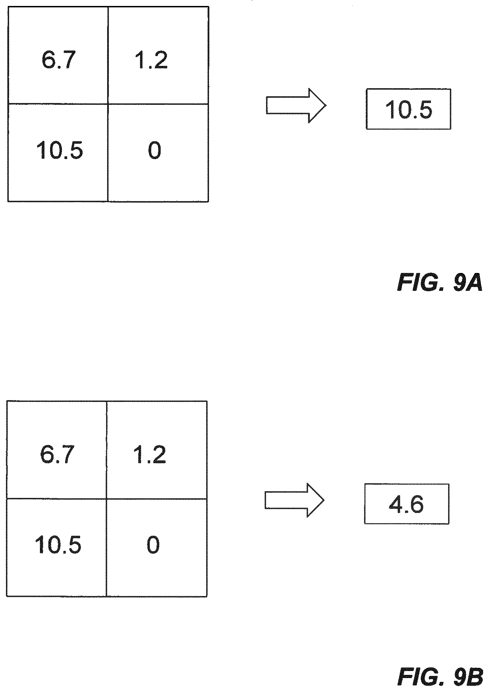

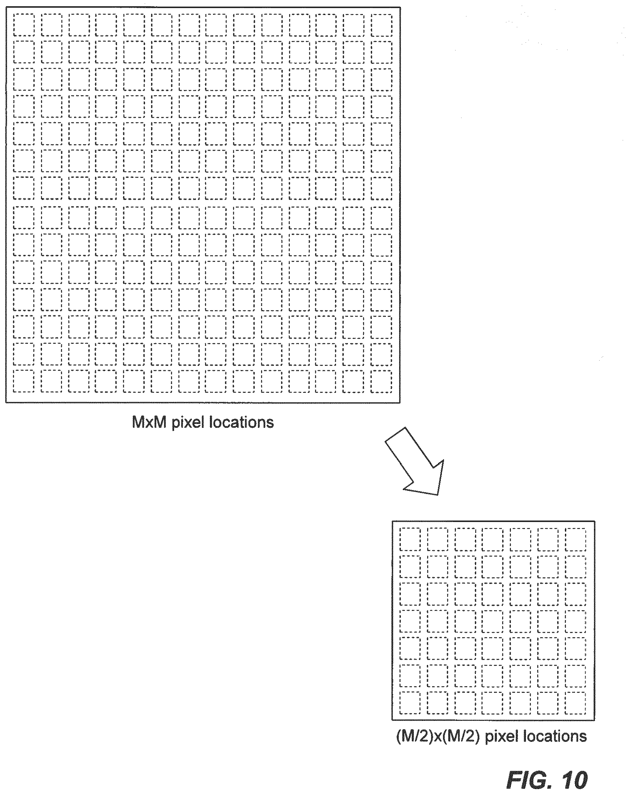

To demonstrate a 2x2 pooling operation, FIG. 9A is a diagram graphically showing first example output results of a 2-pixel by 2-pixel block being reduced to a single value 10.5, which is the largest value of the four output results. The technique shown in FIG. 9A is referred to as "max pooling". When the average value 4.6 of the four output results is used for the single value shown in FIG. 9B, it is referred to as "average pooling". There are other pooling operations, for example, "mixed max average pooling" which is a combination of "max pooling" and "average pooling". The main goal of the pooling operation is to reduce size of the imagery data being processed. FIG. 10 is a diagram illustrating MxM pixel locations, through a 2x2 pooling operation, being reduced to (M/2)x(M/2) locations, which is one fourth of the original size.

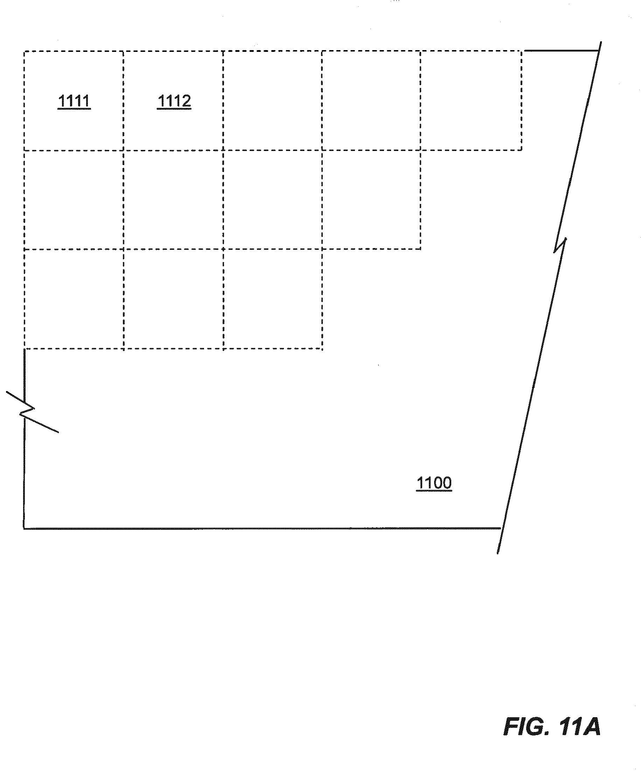

An input image generally contains a large amount of imagery data. In order to perform image processing operations. The input image 1100 is partitioned into M-pixel by M-pixel blocks 1111-1112 as shown in FIG. 11A. Imagery data associated with each of these M-pixel by M-pixel blocks is then fed into respective CNN processing engines. At each of the MxM pixel locations in a particular M-pixel by M-pixel block, 3x3 convolutions are simultaneously performed in the corresponding CNN processing block.

Although the invention does not require specific characteristic dimension of an input image, the input image may be required to resize to fit into a predefined characteristic dimension for certain image processing procedures. In an embodiment, a square shape with $(2^K \times M)$-pixel by $(2^K \times M)$-pixel is required. K is a positive integer (e.g., 1, 2, 3, 4, etc.). When M equals 14 and K equals 4, the characteristic dimension is 224. In another embodiment, the input image is a rectangular shape with dimensions of $(2^I \times M)$-pixel and $(2^J \times M)$-pixel, where I and J are positive integers.

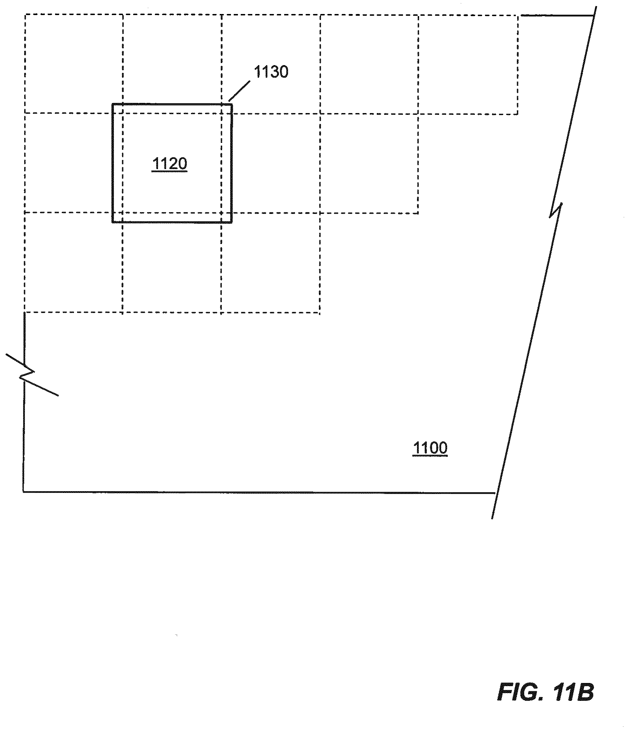

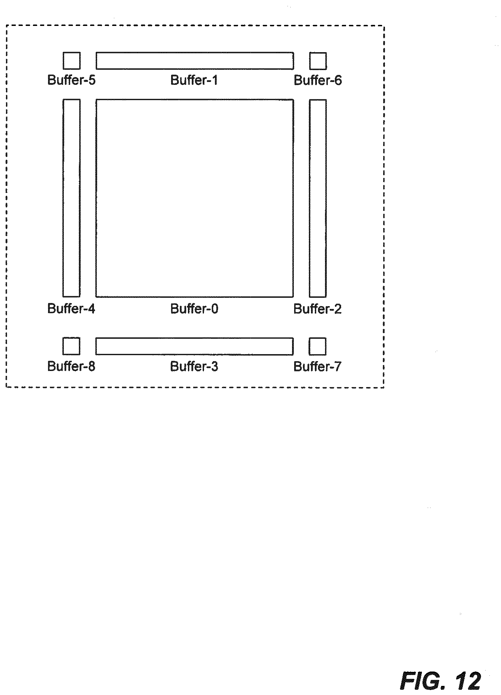

In order to properly perform 3x3 convolutions at pixel locations around the border of a M-pixel by M-pixel block, additional imagery data from neighboring blocks are required. FIG. 11B shows a typical M-pixel by M-pixel block 1120 (bordered with dotted lines) within a (M+2)-pixel by (M+2)-pixel region 1130. The (M+2)-pixel by (M+2)-pixel region is formed by a central portion of M-pixel by M-pixel from the current block, and four edges (i.e., top, right, bottom and left) and four corners (i.e., top-left, top-right, bottom-right and bottom-left) from corresponding neighboring blocks. Additional details are shown in FIG. 12 and corresponding descriptions for the first set of memory buffers.

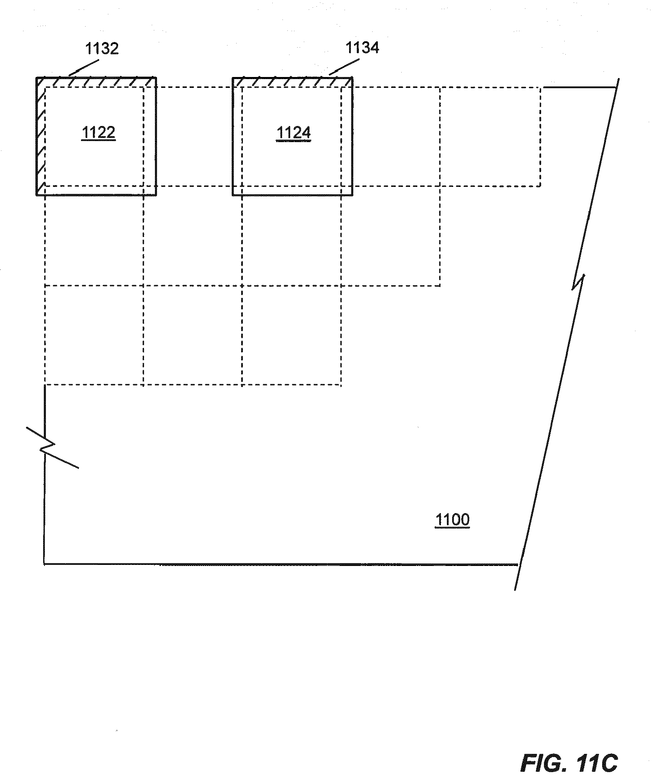

FIG. 11C shows two example M-pixel by M-pixel blocks 1122-1124 and respective associated (M+2)-pixel by (M+2)-pixel regions 1132-1134. These two example blocks 1122-1124 are located along the perimeter of the input image. The first example M-pixel by M-pixel block 1122 is located at top-left corner, therefore, the first example block 1122 has neighbors for two edges and one corner. Value "0"s are used for the two edges and three corners without neighbors (shown as shaded area) in the associated (M+2)-pixel by (M+2)-pixel region 1132 for forming imagery data. Similarly, the associated (M+2)-pixel by (M+2)-pixel region 1134 of the second example block 1124 requires "0"s be used for the top edge and two top corners. Other blocks along the perimeter of the input image are treated similarly. In other words, for the purpose to perform 3x3 convolutions at each pixel of the input image, a layer of zeros ("0"s) is added outside of the perimeter of the input image. This can be achieved with many well-known techniques. For example, default values of the first set of memory buffers are set to zero. If no imagery data is filled in from the neighboring blocks, those edges and corners would contain zeros.

Furthermore, an input image can contain a large amount of imagery data, which may not be able to be fed into the CNN processing engines in its entirety. Therefore, the first set of memory buffers is configured on the respective CNN processing engines for storing a portion of the imagery data of the input image. The first set of memory buffers contains nine different data buffers graphically illustrated in FIG. 12. Nine buffers are designed to match the (M+2)-pixel by (M+2)-pixel region as follows:

1) buffer-0 for storing MxM pixels of imagery data representing the central portion;

2) buffer-1 for storing 1xM pixels of imagery data representing the top edge;

3) buffer-2 for storing Mx1 pixels of imagery data representing the right edge;

4) buffer-3 for storing 1xM pixels of imagery data representing the bottom edge;

5) buffer-4 for storing Mx1 pixels of imagery data representing the left edge;

6) buffer-5 for storing 1x1 pixels of imagery data representing the top left corner;

7) buffer-6 for storing 1x1 pixels of imagery data representing the top right corner;

8) buffer-7 for storing 1x1 pixels of imagery data representing the bottom right corner; and

9) buffer-8 for storing 1x1 pixels of imagery data representing the bottom left corner.

Imagery data received from the I/O data bus are in form of MxM pixels of imagery data in consecutive blocks. Each MxM pixels of imagery data is stored into buffer-0 of the current block. The left column of the received MxM pixels of imagery data is stored into buffer-2 of previous block, while the right column of the received MxM pixels of imagery data is stored into buffer-4 of next block. The top and the bottom rows and four corners of the received MxM pixels of imagery data are stored into respective buffers of corresponding blocks based on the geometry of the input image (e.g., FIGS. 11A-11C).

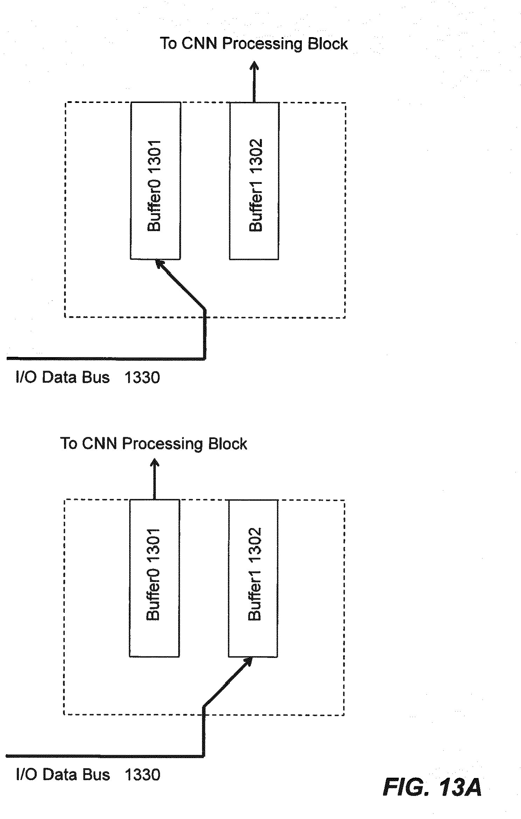

An example second set of memory buffers for storing filter coefficients are shown in FIG. 13A. In one embodiment, a pair of independent buffers Buffer0 1301 and Buffer1 1302 is provided. The pair of independent buffers allow one of the buffers 1301-1302 to receive data from the I/O data bus 1330 while the other one to feed data into a CNN processing block (not shown). Two operational modes are shown herein.

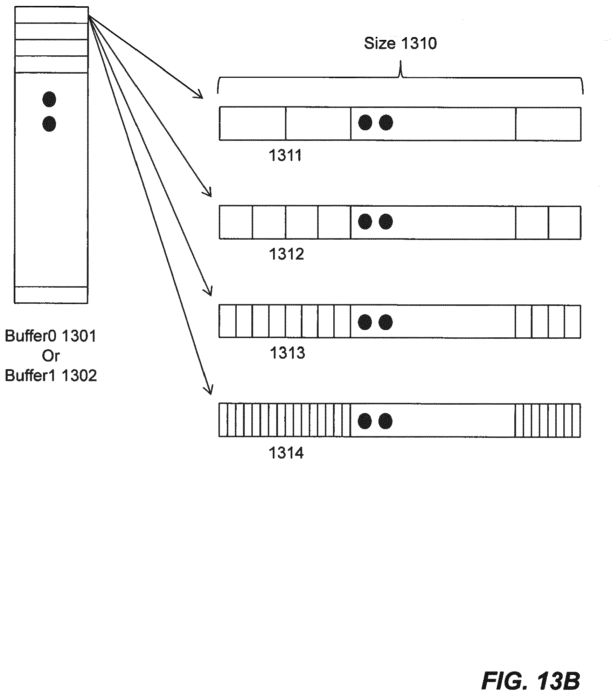

Example storage schemes of filter coefficients are shown in FIG. 13B. Each of the pair of buffers (i.e., Buffer0 1301 or Buffer1 1302) has a width (i.e., word size 1310). In one embodiment, the word size is 120-bit. Accordingly, each of the filter coefficients (i.e., C(3x3) and b) occupies 12-bit in the first example storage scheme 1311. In the second example storage scheme 1312, each filter coefficient occupies 6-bit thereby 20 coefficients are stored in each word. In the third example scheme 1313, 3-bit is used for each coefficient hence four sets of filter coefficients (40 coefficients) are stored. Finally, in the fourth example storage scheme 1314, 80 coefficients are stored in each word, each coefficient occupies 1.5-bit.

In another embodiment, a third memory buffer can be set up for storing entire filter coefficients to avoid I/O delay. In general, the input image must be at certain size such that all filter coefficients can be stored. This can be done by allocating some unused capacity in the first set of memory buffers to accommodate such a third memory buffer. Since all memory buffers are logically defined in RAM (Random-Access Memory), well known techniques may be used for creating the third memory buffer. In other words, the first and the second sets of memory buffers can be adjusted to fit different amounts of imagery data and/or filter coefficients. Furthermore, the total amount of RAM is dependent upon what is required in image processing operations.

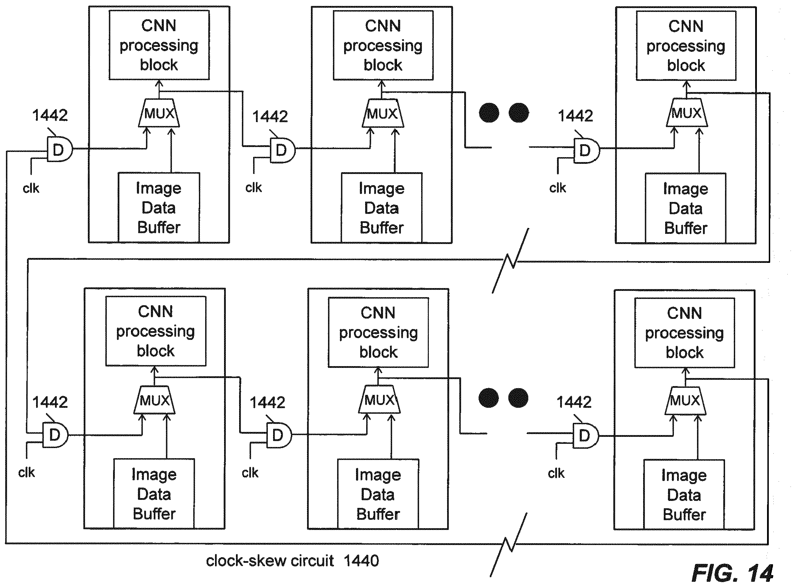

When more than one CNN processing engine is configured on the integrated circuit. The CNN processing engine is connected to first and second neighbor CNN processing engines via a clock-skew circuit. For illustration simplicity, only CNN processing block and memory buffers for imagery data are shown. An example clock-skew circuit 1440 for a group of CNN processing engines are shown in FIG. 14. The CNN processing engines connected via the second example clock-skew circuit 1440 to form a loop. In other words, each CNN processing engine sends its own imagery data to a first neighbor and, at the same time, receives a second neighbor's imagery data. Clock-skew circuit 1440 can be achieved with well-known manners. For example, each CNN processing engine is connected with a D flip-flop 1442.

A special case with only two CNN processing engines are connected in a loop, the first neighbor and the second neighbor are the same.

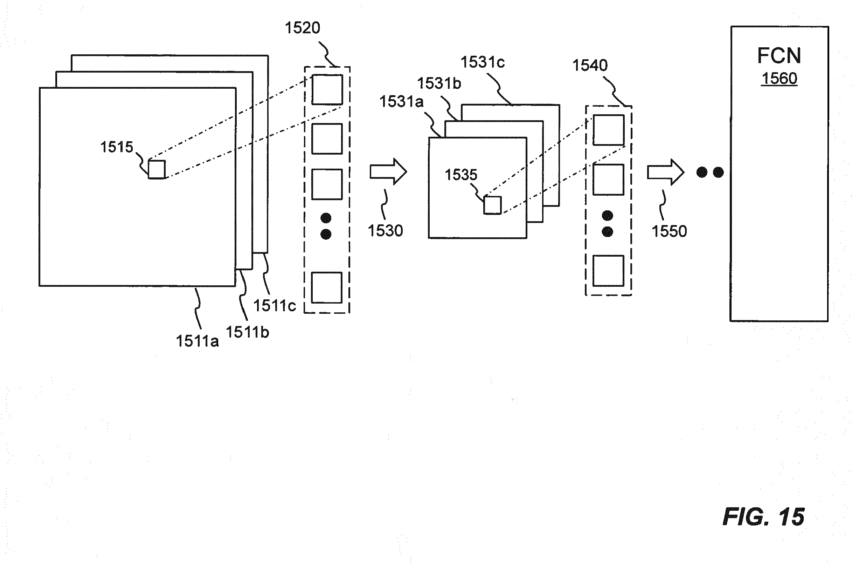

Referring now to FIG. 15, it is a schematic diagram showing an example image processing technique based on convolutional neural networks in accordance with an embodiment of the invention. Based on convolutional neural networks, multi-layer input imagery data 1511 a-1511c is processed with convolutions using a first set of filters or weights 1520. Since the imagery data 1511a-1511c is larger than the filters 1520. Each corresponding overlapped sub-region 1515 of the imagery data is processed. After the convolutional results are obtained, activation may be conducted before a first pooling operation 1530. In one embodiment, activation is achieved with rectification performed in a rectified linear unit (ReLU). As a result of the first pooling operation 1530, the imagery data is reduced to a reduced set of imagery data 1531a-1531c. For 2x2 pooling, the reduced set of imagery data is reduced by a factor of 4 from the previous set.

The previous convolution-to-pooling procedure is repeated. The reduced set of imagery data 1531a-1531c is then processed with convolutions using a second set of filters 1540. Similarly, each overlapped sub-region 1535 is processed. Another activation can be conducted before a second pooling operation 1540. The convolution-to-pooling procedures are repeated for several layers and finally connected to a Fully-connected Networks (FCN) 1560. In image classification, respective probabilities of predefined categories can be computed in FCN 1560.

This repeated convolution-to-pooling procedure is trained using a known dataset or database. For image classification, the dataset contains the predefined categories. A particular set of filters, activation and pooling can be tuned and obtained before use for classifying an imagery data, for example, a specific combination of filter types, number of filters, order of filters, pooling types, and/or when to perform activation. In one embodiment, convolutional neural networks are based on Visual Geometry Group (VGG16) architecture neural nets, which contains 13 convolutional layers and three fully-connected network layers.

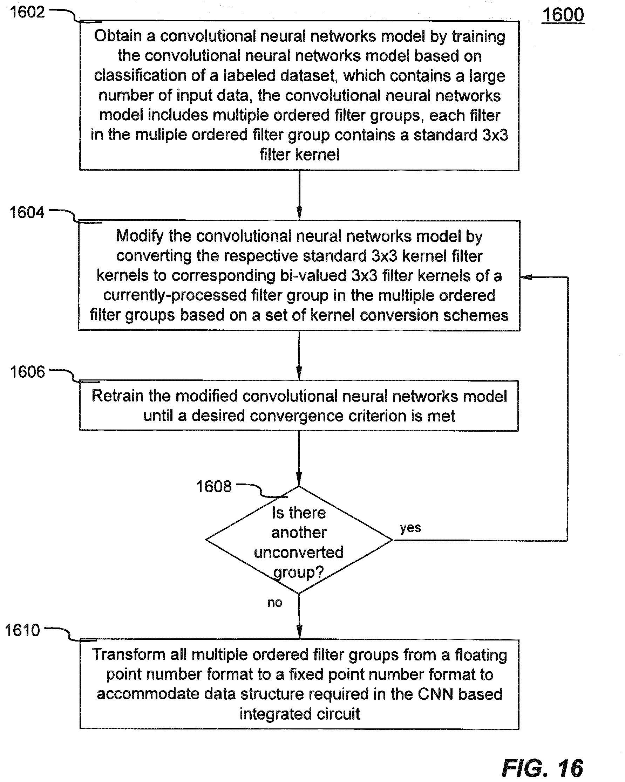

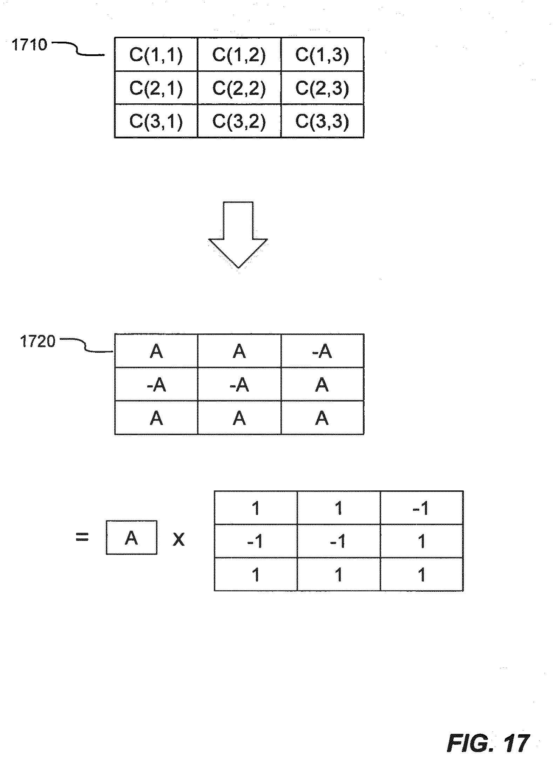

A trained convolutional neural networks model is achieved with an example set of operations 1600 shown in FIG. 16. At action 1602, a convolutional neural networks model is first obtained by training the convolutional neural networks model based on image classification of a labeled dataset, which contains a sufficiently large number of input data (e.g., imagery data, converted voice data, optical character reorganization (OCR) data, etc.). For example, there are at least 4,000 data for each category. In other words, each data in the labeled dataset is associated with a category to be classified. The convolutional neural networks model includes multiple ordered filter groups (e.g., each filter group corresponds to a convolutional layer in the convolutional neural networks model). Each filter in the multiple ordered filter groups contains a standard 3x3 filter kernel (i.e., nine coefficients in floating point number format (e.g., standard 3x3 filter kernel 1710 in FIG. 17)). Each of the nine coefficients can be any negative or positive real number (i.e., a number with fraction). The initial convolutional neural networks model may be obtained from many different frameworks including, but not limited to, Mxnet, caffe, tensorflow, etc.

Then, at action 1604, the convolutional neural networks model is modified by converting respective standard 3x3 filter kernels 1710 to corresponding bi-valued 3x3 filter kernels 1720 of a currently-processed filter group in the multiple ordered filter groups based on a set of kernel conversion schemes. In one embodiment, each of the nine coefficients $C(i,j)$ in the corresponding bi-valued 3x3 filter kernel 1720 is assigned a value 'A' which equals to the average of absolute coefficient values multiplied by the sign of corresponding coefficients in the standard 3x3 filter kernel 1710 shown in following formula:

$$A = \sum_{1 \le i,j \le 3} |C(i,j)| \; / \; 9 \qquad\qquad (2)$$

Filter groups are converted one at a time in the order defined in the multiple ordered filter groups. In certain situation, two consecutive filter groups are optionally combined such that the training of the convolutional neural networks model is more efficient.

Next, at action 1606, the modified convolutional neural networks model is retrained until a desired convergence criterion is met or achieved. There are a number of well known convergence criteria including, but not limited to, completing a predefined number of retraining operation, converging of accuracy loss due to filter kernel conversion, etc. In one embodiment, all filter groups including those already converted in previous retraining operations can be changed or altered for fine tuning. In another embodiment, the already converted filter groups are frozen or unaltered during the retraining operation of the currently-processed filter group.

Process 1600 moves to decision 1608, it is determined whether there is another unconverted filter group. If 'yes', process 1600 moves back to repeat actions 1604-1606 until all filter groups have been converted. Decision 1608 becomes 'no' thereafter. At action 1610, coefficients of bi-valued 3x3 filter kernels in all filter groups are transformed from a floating point number format to a fixed point number format to accommodate the data structure required in the CNN based integrated circuit. Furthermore, the fixed point number is implemented as reconfigurable circuits in the CNN based integrated circuit. In one embodiment, the coefficients are implemented using 12-bit fixed point number format.

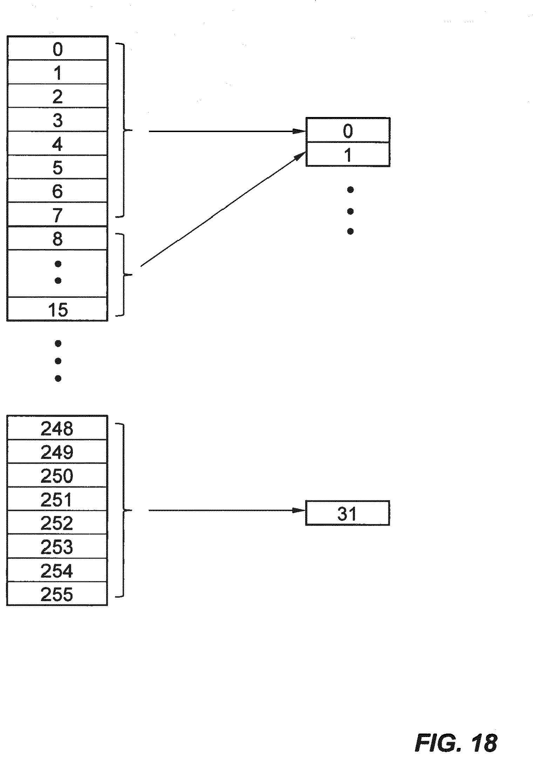

FIG. 18 is a diagram showing an example data conversion scheme for converting data from 8-bit [0-255] to 5-bit [0-31] per pixel. For example, bits 0-7 becomes 0, bits 8-15 becomes 1, etc.

As described in process 1600 of FIG. 16, a convolutional neural networks model is trained for the CNN based integrated circuit. The entire set of trained coefficients or weights are pre-configured to the CNN based integrated circuit as a feature extractor for a particular data format (e.g., imagery data, voice spectrum, fingerprint, palm-print, optical character recognition (OCR), etc.). In general, there are many convolutional layers with many filters in each layer. In one embodiment, VGG16 model contains 13 convolutional layers. In a software based image classification task, computations for the convolutional layers take majority of computations (e.g., 90%) traditionally. This computations is drastically reduced with a dedicated hardware such as CNN based IC 100.

For better extracting features in different domains, like speech, face recognition, gesture recognition and etc, different sets of configured convolution layer coefficients are provided for that domain. And the particular set of convolution layers is used as a general feature extractor for the specific tasks in that domain. For example, the specific task of family members face recognition in the domain of face recognition, and the specific task of company employee face recognition also in the same domain of face recognition. And these two specific tasks can share the same set of convolution layers coefficients used for face detection.

Some deep learning models contain many layers such that memory buffers of a single CNN based IC is not large enough to store the filter coefficients for the entire model. In order to overcome such problems, more than one CNN based ICs are connected in series with each to store filter coefficients of a portion of the deep learning model. The large deep learning model can thus be processed with a number of CNN based ICs connected in series. An input buffer is configured in a CNN based IC for storing output data from previous CNN based IC when serially-connected.

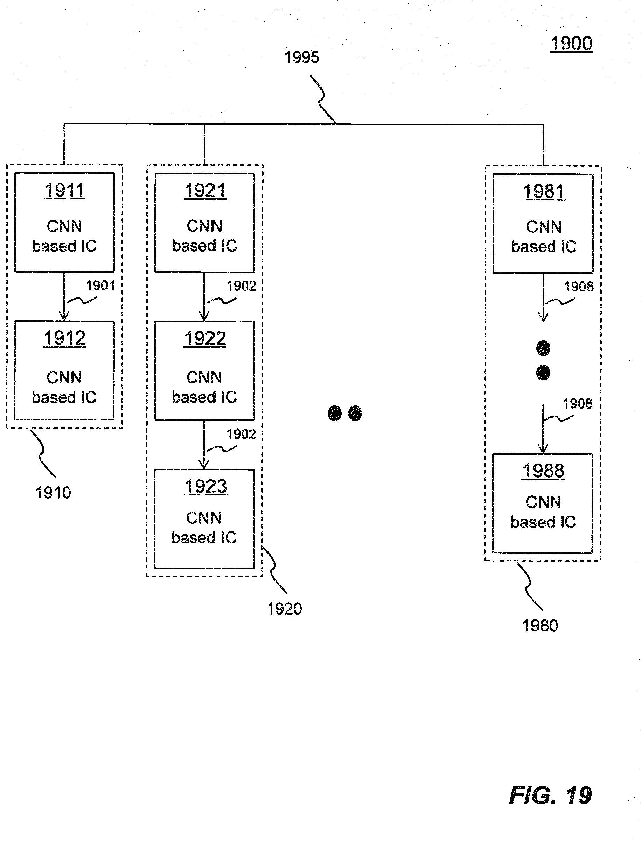

Referring now to FIG. 19, it is shown an example deep learning image processing system 1900. Deep learning image processing system 1900 contains multiple groups (e.g., group-1 1910, group-2 1920, .., group-n 1980) of CNN based ICs. Groups are connected in parallel via a network bus 1995. Each of the groups contains multiple CNN based ICs. For example, as shown in FIG. 19, group-1 1910 contains first and second CNN based ICs 1911-1912 connected in series via a network bus 1901. Input buffer of the second CNN based IC 1912 is configured for storing the output from the first CNN based IC 1911. Group-2 1920 contains three CNN based ICs 1921-1923 connected in series via a network bus 1902, while group-n 1980 contains a number of CNN based ICs 1981-1988 connected in series via a network bus 1908. Similarly, input buffer of a CNN based IC is configured for storing the output from a previous CNN based IC in each group of serially-connected CNN based ICs. In order to facilitate connections in series and in parallel, additional circuitry is added to the CNN based integrated circuit 100. One example bus for network bus 1995 is Universal Serial Bus (USB). Similarly, network buses 1901, 1902, .., 1908 can also be USB. In one embodiment, each CNN based IC is packaged or housed in a dongle with a USB connector. In another embodiment, network bus is PCIe (Peripheral Component Interconnect Express) bus for each CNN based IC to be mounted or installed in a computer system.

Modular approach used in the deep learning image processing system 1900 neither sets a limit as to how many CNN based ICs can be connected nor sets a connection type (i.e., series and/or parallel). With such a modular approach, deep learning image process system can accommodate any size of input data and any size of deep learning model. Input data that is too large to be processed by a single CNN based IC is partitioned into subsections. Subsections are then processed by respective groups of CNN based ICs. Large deep learning model is divided into portions to be handled by respective CNN based ICs connected in series within a group.

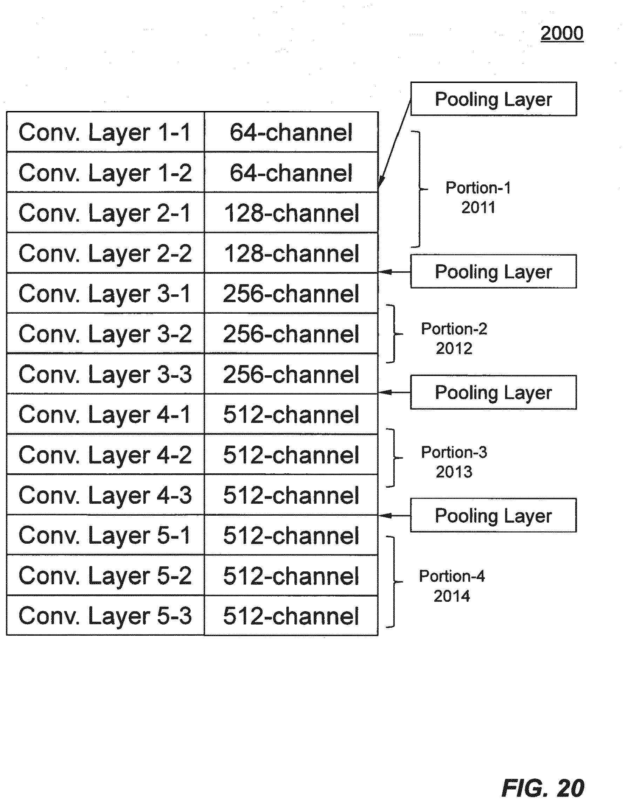

An example deep learning model 2000 divided into multiple consecutive portions is shown in FIG. 20. Deep learning model 2000 contains a number of ordered convolutional layers organized by several major convolutional layer groups separated by multiple pooling layers. Consecutive portions include "Portion-1" 2011 containing convolutional layers 1-1, 1-2, 2-1 and 2-2, "Portion-2" 2012 containing convolutional layers 3-1, 3-2 and 3-3, "Portion-3" 2013 containing convolutional layers 4-1, 4-2 and 4-3, and "Portion-4" 2014 containing convolutional layers 5-1, 5-2 and 5-3. Each portion is separated by a pooling layer; and each portion contains at least one major convolutional layer group. In the example, "Portion-1" 2011 contains two major convolutional layer groups while other portions contain one major convolutional layer group. Portion division scheme is performed by user of the deep learning image processing system.

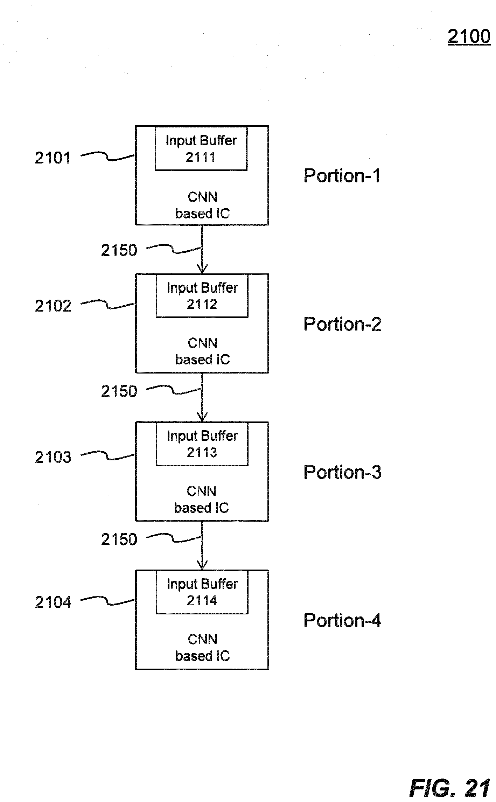

FIG. 21 is a schematic diagram showing an example deep learning image processing system 2100 with four CNN based ICs 2101-2104 connected in series via network bus 2150. Four CNN based ICs 2101-2104 are configured to process respective portions 2011-2014 such that a larger deep learning model can be processed. In other words, a large deep leaning model is processed sequentially by a cascade of CNN based ICs connected in series. In another embodiment, a pipelined stream technique is used for accelerating batch processing of several input data using the deep learning image processing system. Input buffers 2111-2114 are inlcuded in the CNN based ICs 2101-2104, respectively. When CNN based ICs are connected in series, input buffer of a particular CNN based IC is configured for storing the output results (i.e., features) from previous CNN based IC connected in the series.

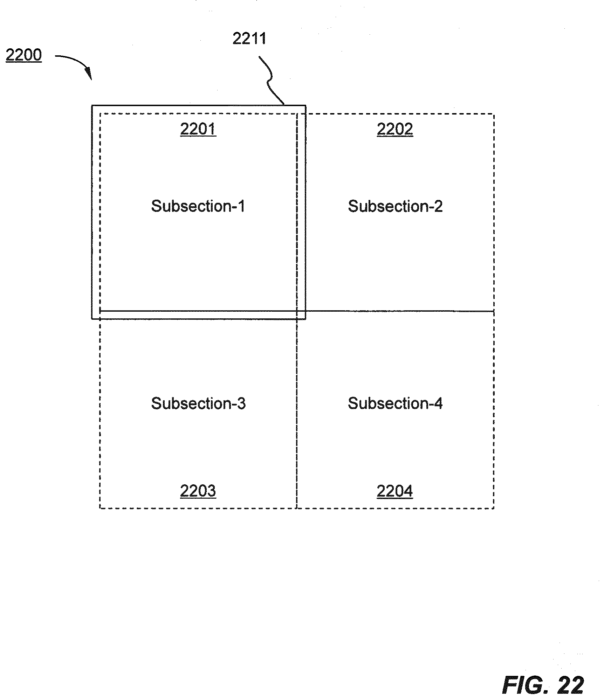

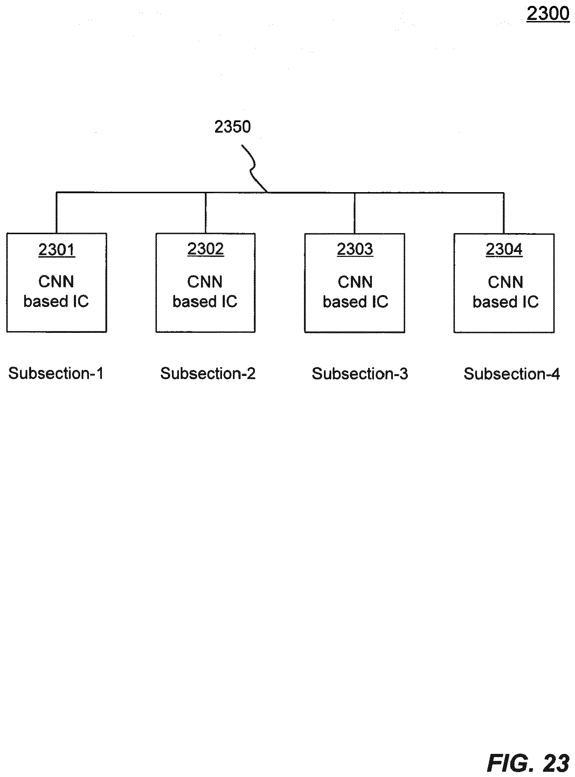

FIG. 22 is a diagram showing an example input data 2200 being partitioned into four subsections 2201-2204. An input data is partitioned into smaller subsections such that each CNN based IC can handle. In this example, the input data 2200 is partitioned into "Subsection-1" 2201, "Subsection-2" 2202, "Subsection-3" 2203 and "Subsection-4" 2204. In order to ensure proper processing between subsections, each subsection 2211 includes at least one overlapped row and column at it border with other neighboring subsection. In one embodiment, each overlapped column and row contains one-pixel thickness. Four subsections 2201-2204 are processed by an example deep learning image processing system 2300 shown in FIG. 23. Deep learning image processing system 2300 contains four CNN based ICs 2301-2304 connected in parallel via network bus 2350.

Although the invention has been described with reference to specific embodiments thereof, these embodiments are merely illustrative, and not restrictive of, the invention. Various modifications or changes to the specifically disclosed example embodiments will be suggested to persons skilled in the art. For example, whereas specific type example deep learning model has been shown and described, other types of deep learning model may be used to achieve the same, for example, ResNet, MobileNet, etc. Furthermore, input data has been shown and described to be partitioned into four subsections, other numbers of subsections may be used, for example, 8, 12, 16, etc. Additionally, whereas overlapped column and row has been shown and described as one-pixel thickness, other numbers of pixels may be used for achieving the same. Finally, whereas simple example of deep learning image processing system has been shown and described, other combinations of differently connected with different numbers of CNN based ICs can achieve the same. In summary, the scope of the invention should not be restricted to the specific example embodiments disclosed herein, and all modifications that are readily suggested to those of ordinary skill in the art should be included within the spirit and purview of this application and scope of the appended claims.

## Claims

1. A deep learning image processing system comprising:

   a plurality of cellular neural networks (CNN) based integrated circuits (ICs) operatively connected in series via a network bus, the CNN based ICs being configured for performing convolutional operations in respective portions of a deep learning model for extracting features out of input data, wherein the deep learning model is divided into a plurality of consecutive portions and each of the CNN based ICs comprises a plurality of CNN processing engines operatively coupled to at least one input/output data bus, the plurality of CNN processing engines being connected in a loop with a clock-skew circuit.

2. The system of claim 1, wherein each CNN processing engine includes:

   a CNN processing block configured for simultaneously obtaining convolution operations results using corresponding input data and pre-trained filter coefficients;
   a first set of memory buffers operatively coupling to the CNN processing block for storing the corresponding input data; and
   a second set of memory buffers operative coupling to the CNN processing block for storing the pre-trained filter coefficients.

3. The system of claim 1, wherein said each of the CNN based ICs is packaged in a dongle for facilitating connection with the network bus that comprises a Universal Serial Bus.

4. The system of claim 3, wherein said each of the CNN based ICs is installed in a computer system for facilitating connection with the network bus that comprises a Peripheral Component Interconnect Express bus.

5. The system of claim 1, wherein the plurality of consecutive portions is defined by a user of the system.

6. The system of claim 5, wherein each of the plurality of consecutive portions is separated by a pooling layer.

7. The system of claim 5, wherein each of the plurality of consecutive portions includes at least one major convolutional layer group in the deep learning model.

8. The system of claim 1, wherein an input buffer of said each of the CNN based ICs is configured for receiving an output of immediately prior portion in the plurality of consecutive portions as the input data.

9. A deep learning image processing system comprising:
a plurality of cellular neural networks (CNN) based integrated circuits (ICs) operatively connected in parallel via a network bus, the CNN based ICs being configured for performing convolutional operations in a deep learning model for extracting features out of respective subsections of input data, wherein the input data is partitioned into at least first and second subsections, and wherein each of the CNN based ICs comprises a plurality of CNN processing engines operatively coupled to at least one input/output data bus, the plurality of CNN processing engines being connected in a loop with a clock-skew circuit.

10. The system of claim 9, wherein each CNN processing engine includes:

a CNN processing block configured for simultaneously obtaining convolution operations results using corresponding input data and pre-trained filter coefficients;
a first set of memory buffers operatively coupling to the CNN processing block for storing the corresponding input data; and
a second set of memory buffers operative coupling to the CNN processing block for storing the pre-trained filter coefficients.

11. The system of claim 9, wherein said each of the CNN based ICs is packaged in a dongle for facilitating connection with the network bus that comprises a Universal Serial Bus.

12. The system of claim 11, wherein said each of the CNN based ICs is installed in a computer system for facilitating connection with the network bus that comprises a Peripheral Component Interconnect Express bus.

13. The system of claim 9, wherein the first subsection and the second subsection of the input data include at least one overlapped row and column at respective borders with a thickness of one-pixel.

14. A deep learning image processing system comprising:

a first group of a plurality of cellular neural networks (CNN) based integrated circuits (ICs);
a second group of a plurality of CNN based ICs;
the first group and the second group being operatively connected in parallel via a network bus;
the plurality of CNN based ICs in the first group, being operatively connected in series via the network bus, and being configured for performing convolutional operations in respective portions of a deep learning model for extracting features out of a first subsection of input data; and
the plurality of CNN based ICs in the second group, being operatively connected in series via the network bus, and being configured for performing convolutional operations in respective portions of the deep learning model for extracting features out of a second subsection of the input data.

15. The system of claim 14, wherein the deep learning model is divided into a plurality of consecutive portions being handled by the respective CNN based ICs.

16. The system of claim 14, wherein the input data is partitioned into at least first and second subsections.

17. The system of claim 14, wherein each of the CNN based ICs comprises a plurality of CNN processing engines operatively coupled to at least one input/output data bus, the plurality of CNN processing engines being connected in a loop with a clock-skew circuit.

18. The system of claim 17, wherein each CNN processing engine includes:

a CNN processing block configured for simultaneously obtaining convolution operations results using corresponding input data and pre-trained filter coefficients;
a first set of memory buffers operatively coupling to the CNN processing block for storing the corresponding input data; and
a second set of memory buffers operative coupling to the CNN processing block for storing the pre-trained filter coefficients.

**19.** The system of claim 14, wherein said each of the CNN based ICs is packaged in a dongle for facilitating connection with the network bus that comprises a Universal Serial Bus.

**20.** The system of claim 18, wherein said each of the CNN based ICs is installed in a computer system for facilitating connection with the network bus that comprises a Peripheral Component Interconnect Express bus.

```
                                                100

     ┌──────────────┐
     │  Controller  │
     │     110      │
     └──────────────┘


     ┌──────────────┐
     │     CNN      │
     │  Processing  │   ●  ●
     │    Engine    │
     │     102      │
     └──────────────┘
         │    │
    ─────────────────────────────────
         I/O  Data Bus   120
              ●
              ●
```

**FIG. 1A**

FIG. 1B

200

Imagery Data Loading Control　212

Filter Coefficients Loading Control  214

Imagery Data Output Control   216

Image Processing Operations Control   218

Register Files    220

*FIG. 2*

FIG. 3

410

420

M

M+2

*FIG. 4*

531

**FIG. 5A**

532

m,n

FIG. 5B

533

m,n

FIG. 5C

600

| | | |
|---|---|---|
| m-1, n-1 | m-1, n | m-1, n+1 |
| 601 | 602 | 603 |

In(3x3) →

C(3x3) →

b →

| | | |
|---|---|---|
| m, n-1 | m, n | m, n+1 |
| 604 | 605 | 606 |

Out(1x1) →

| | | |
|---|---|---|
| m+1, n-1 | m+1, n | m+1, n+1 |
| 607 | 608 | 609 |

**FIG. 6**

700

Adder  721

Multiplier  722

Shifter 723

Rectifier 724

Pooling Operator 725

**FIG. 7**

| 10.5 | $\longrightarrow$ | 10.5 |

| -2.3 | $\longrightarrow$ | 0 |

**FIG. 8**

| | |
|---|---|
| 6.7 | 1.2 |
| 10.5 | 0 |

⇒ 10.5

**FIG. 9A**

| | |
|---|---|
| 6.7 | 1.2 |
| 10.5 | 0 |

⇒ 4.6

**FIG. 9B**

MxM pixel locations

(M/2)x(M/2) pixel locations

*FIG. 10*

**FIG. 11A**

1130

1120

1100

**FIG. 11B**

1132    1134

1132    1134

1122    1124

1100

*FIG. 11C*

Buffer-5    Buffer-1    Buffer-6

Buffer-4    Buffer-0    Buffer-2

Buffer-8    Buffer-3    Buffer-7

*FIG. 12*

To CNN Processing Block

Buffer0 1301

Buffer1 1302

I/O Data Bus   1330

To CNN Processing Block

Buffer0 1301

Buffer1 1302

I/O Data Bus   1330

*FIG. 13A*

Size 1310

1311

1312

1313

1314

Buffer0 1301
Or
Buffer1 1302

FIG. 13B

clock-skew circuit 1440

**FIG. 14**

EP 3 553 709 A1

**FIG. 15**

EP 3 553 709 A1

1602 — Obtain a convolutional neural networks model by training the convolutional neural networks model based on classification of a labeled dataset, which contains a large number of input data, the convolutional neural networks model includes multiple ordered filter groups, each filter in the muliple ordered filter group contains a standard 3x3 filter kernel

1600

1604 — Modify the convolutional neural networks model by converting the respective standard 3x3 kernel filter kernels to corresponding bi-valued 3x3 filter kernels of a currently-processed filter group in the multiple ordered filter groups based on a set of kernel conversion schemes

1606 — Retrain the modified convolutional neural networks model until a desired convergence criterion is met

1608 — Is there another unconverted group?

yes

no

1610 — Transform all multiple ordered filter groups from a floating point number format to a fixed point number format to accommodate data structure required in the CNN based integrated circuit

*FIG. 16*

| | | |
|---|---|---|
| C(1,1) | C(1,2) | C(1,3) |
| C(2,1) | C(2,2) | C(2,3) |
| C(3,1) | C(3,2) | C(3,3) |

1710

| | | |
|---|---|---|
| A | A | -A |
| -A | -A | A |
| A | A | A |

1720

$= \boxed{A} \times$

| | | |
|---|---|---|
| 1 | 1 | -1 |
| -1 | -1 | 1 |
| 1 | 1 | 1 |

**FIG. 17**

**FIG. 18**

1995

<u>1900</u>

<u>1911</u>

CNN
based IC

1901

<u>1912</u>

CNN
based IC

1910

<u>1921</u>

CNN
based IC

1902

<u>1922</u>

CNN
based IC

1902

<u>1923</u>

CNN
based IC

1920

<u>1981</u>

CNN
based IC

1908

1908

<u>1988</u>

CNN
based IC

1980

*FIG. 19*

<u>2000</u>

| | |
|---|---|
| Conv. Layer 1-1 | 64-channel |
| Conv. Layer 1-2 | 64-channel |
| Conv. Layer 2-1 | 128-channel |
| Conv. Layer 2-2 | 128-channel |
| Conv. Layer 3-1 | 256-channel |
| Conv. Layer 3-2 | 256-channel |
| Conv. Layer 3-3 | 256-channel |
| Conv. Layer 4-1 | 512-channel |
| Conv. Layer 4-2 | 512-channel |
| Conv. Layer 4-3 | 512-channel |
| Conv. Layer 5-1 | 512-channel |
| Conv. Layer 5-2 | 512-channel |
| Conv. Layer 5-3 | 512-channel |

Pooling Layer

Portion-1
2011

Pooling Layer

Portion-2
2012

Pooling Layer

Portion-3
2013

Pooling Layer

Portion-4
2014

*FIG. 20*

<u>2100</u>

2101 — Input Buffer 2111 / CNN based IC — Portion-1

2150 —

2102 — Input Buffer 2112 / CNN based IC — Portion-2

2150 —

2103 — Input Buffer 2113 / CNN based IC — Portion-3

2150 —

2104 — Input Buffer 2114 / CNN based IC — Portion-4

*FIG. 21*

2211

2200

| 2201 | 2202 |
|---|---|
| Subsection-1 | Subsection-2 |
| Subsection-3 | Subsection-4 |
| 2203 | 2204 |

*FIG. 22*

2300

2350

| 2301 CNN based IC | 2302 CNN based IC | 2303 CNN based IC | 2304 CNN based IC |
|---|---|---|---|

Subsection-1          Subsection-2          Subsection-3          Subsection-4

*FIG. 23*

**EUROPEAN SEARCH REPORT**

Application Number

EP 19 16 6678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 940 534 B1 (GYRFALCON TECH INC [US]) 10 April 2018 (2018-04-10) * the whole document * | 1-20 | INV. G06N3/063 G06N3/04 |
| X | US 2018/053084 A1 (LI YILEI [US] ET AL) 22 February 2018 (2018-02-22) * abstract * * paragraph [0001] * * paragraph [0007] * * paragraph [0018] - paragraph [0024]; figures 1-4A * * paragraph [0033] - paragraph [0035]; figures 6,7 * | 1-20 | |

TECHNICAL FIELDS SEARCHED (IPC)

G06N

The present search report has been drawn up for all claims

| Place of search | Date of completion of the search | Examiner |
|---|---|---|
| The Hague | 30 August 2019 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 16 6678

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2019

| Patent document cited in search report | | Publication date | Patent family member(s) | | Publication date |
|---|---|---|---|---|---|
| US 9940534 | B1 | 10-04-2018 | NONE | | |
| US 2018053084 | A1 | 22-02-2018 | CN | 107766935 A | 06-03-2018 |
| | | | TW | 201807622 A | 01-03-2018 |
| | | | US | 2018053084 A1 | 22-02-2018 |

EPO FORM P0459

For more details about this annex : see Official Journal of the European Patent Office, No. 12/82